# DEMANDE DE BREVET EUROPEEN

(11) **EP 0 654 376 A1**
(43) Date de publication de la demande: **24.05.1995**
(21) Numéro de dépôt: 94402405.8
(22) Date de dépôt: 26.10.1994
(51) Int. Cl.: B60R 1/02

(54) **Dispositif de maintien d'axe croisillon pour rétroviseur**

(30) Priorité: 22.11.1993 FR 9313923
(71) Demandeur: MANZONI BOUCHOT RETROVISEURS en abrégé M.B.R., S.A., F-39200 Saint-Claude (FR)
(72) Inventeur: Manzoni, Bernard, F-39200 Saint-Claude (FR)
(74) Mandataire: Hasenrader, Hubert

(57) **Abrégé**

Rétroviseur comportant : un support fixe (10), un axe croisillon (14), une platine orientable porte-miroir (20) et un dispositif de maintien de l'axe croisillon.

Les moyens de maintien du premier axe (16) de l'axe croisillon comportent un premier (26) et un second (28) paliers rigides alignés solidaires de la face avant (12) du support fixe (10) et servant au maintien positif du premier axe (16). Le premier palier (26) au moins présente une ouverture frontale (34) qui s'étend, à partir de son ouverture frontale (34), vers la face avant (12) du support fixe (10).

Les moyens de maintien du second axe (18) de l'axe croisillon comportent un troisième (30) et un quatrième (32) paliers rigides alignés solidaires de la face arrière de la platine (20) et servant au maintien positif du second axe (18). Le troisième palier (30) au moins est prévu de manière analogue au premier palier.

## Description

La présente invention concerne un rétroviseur comportant : un support fixe présentant une face avant ; un axe croisillon comprenant deux axes perpendiculaires l'un à l'autre, solidaires l'un de l'autre, et présentant chacun deux extrémités ; une platine orientable porte-miroir présentant une face avant destinée à recevoir un miroir et une face arrière destinée à être placée en regard de la face avant du support fixe ; et un dispositif de maintien de l'axe croisillon, ce dispositif comportant des moyens de maintien du premier axe dudit axe croisillon solidaires de la face avant du support fixe et des moyens de maintien du second axe dudit axe croisillon solidaires de la face arrière de la platine, cette dernière étant orientable par pivotement autour desdits premier et second axes.

De tels rétroviseurs sont connus notamment par le brevet français n° 2 526 737 qui concerne plus précisément un dispositif limiteur de couple pour mécanisme de commande d'un miroir de rétroviseur. Selon ce brevet français, l'axe croisillon est monté sur la platine par deux pattes et, sur le support fixe, par une chape.

Les moyens connus de maintien de l'axe croisillon, tels que les pattes et la chape précités, agissent par clipsage et, par conséquent, ne procurent pas un maintien positif et n'offrent pas toujours une résistance suffisante à l'arrachement de l'axe.

La présente invention a pour but de remédier à cet inconvénient en proposant des moyens de maintien positif d'un axe croisillon évitant tout risque de désarticulation suite à un effort d'arrachement et permettant un montage simple et rapide de cet axe tant sur le support fixe que sur la platine porte-miroir.

A cet effet, les moyens de maintien du premier axe comportent un premier et un second paliers rigides alignés présentant chacun une ouverture frontale et servant au maintien positif dudit premier axe au voisinage de chacune de ses deux extrémités. Le premier palier au moins présente une cavité qui s'étend, à partir de l'ouverture frontale dudit premier palier, vers la face avant du support fixe, de telle sorte que la première extrémité du premier axe puisse être engagée en oblique dans le premier palier et dans ladite cavité et que la seconde extrémité dudit premier axe puisse être engagée dans le second palier.

Les moyens de maintien du second axe comportent un troisième et un quatrième paliers rigides alignés présentant chacun une ouverture frontale et servant au maintien positif dudit second axe au voisinage de chacune de ses deux extrémités. Le troisième palier au moins présente une cavité qui s'étend, à partir de l'ouverture frontale dudit troisième palier, vers la face arrière de la platine, de telle sorte que la première extrémité du second axe puisse être engagée en oblique dans le troisième palier et dans ladite cavité et que la seconde extrémité dudit second axe puisse être engagée dans le quatrième palier.

L'ouverture frontale de l'un des paliers est évidemment située sur la face de ce palier qui recoit l'extrémité associée de l'axe, et est donc dirigée vers l'extrémité opposée à ladite extrémité associée.

Dans la suite, on désignera par face terminale, la face du palier opposée à l'ouverture frontale. Quand on s'intéressera au support fixe ou à un palier solidaire de ce support fixe, le sens vers le haut sera celui qui s'éloigne de la face avant du support fixe et le sens vers le bas sera celui qui se rapproche de cette face avant. De manière similaire, quand on s'intéressera à la platine porte-miroir ou à un palier solidaire de cette platine porte-miroir, le sens vers le haut sera celui qui s'éloigne de la face arrière de la platine et le sens vers le bas sera celui qui se rapproche de cette face arrière. La paroi supérieure d'un palier est celle des parois de ce palier qui est dirigée vers le haut.

Les paliers qui, comme on le verra dans la suite, peuvent être renforcés, évitent tout risque de désarticulation de l'axe croisillon suite à un effort d'arrachement et procurent un maintien positif par leurs parois supérieures. Par ailleurs, le montage de cet axe est simple et rapide tant sur le support fixe que sur la platine porte-miroir.

En effet, le montage du premier axe s'effectue en introduisant, dans un premier temps, sa première extrémité dans l'ouverture frontale du premier palier jusque dans sa cavité. La présence de cette cavité permet d'introduire l'axe en position inclinée vers le bas, c'est-à-dire vers la face avant du support fixe. Dans un deuxième temps, la première extrémité du premier axe s'étendant jusque dans la cavité, on ramène l'axe croisillon dans une position où le premier axe est parallèle à la face avant du support fixe et où la seconde extrémité de ce premier axe peut être introduite dans l'ouverture frontale du second palier. Dans un troisième temps, par simple translation de l'axe vers le second palier, on insère la seconde extémité du premier axe dans ce second palier. Ainsi, le premier axe de l'axe croisillon est monté. Ensuite, il est possible de monter le second axe de l'axe croisillon de manière analogue en introduisant d'abord sa première extrémité dans l'ouverture frontale du troisième palier jusque dans la cavité de celui-ci, en rabattant ce second axe dans une position parallèle à la face arrière de la platine, et en le translatant de sorte que sa première extrémité pénètre dans le quatrième palier.

Selon un mode de réalisation avantageuse, le premier palier peut présenter une ouverture terminale à laquelle se raccorde vers le bas l'ouverture terminale de sa cavité. L'ensemble formé par ces ouvertures terminales s'étend sur une hauteur supérieure au diamètre du premier axe au voisinage de sa première extrémité. Ainsi, on peut non seulement introduire la première extrémité du premier axe dans la cavité du premier palier mais la faire dépasser à travers les ouvertures terminales du palier et de sa cavité. Ceci est possible dans la position inclinée vers le bas du premier axe et, dans la mesure où l'ensemble formé par lesdites ouvertures terminales s'étend sur une hauteur suffisante, on peut à partir de cette position inclinée vers le bas ramener l'axe dans une position parallèle à la face avant du support fixe tout en laissant, provisoirement, sa première extrémité dépasser par l'ouverture terminale du palier. Ensuite, il suffit de déplacer l'axe en translation pour amener sa deuxième extrémité dans le deuxième palier.

Le troisième palier peut également présenter une ouverture terminale à laquelle, de manière similaire à ce qui vient d'être décrit, se raccorde vers le bas l'ouverture terminale de la cavité de ce troisième palier. Le montage du second axe peut donc être effectué de manière analogue au montage du premier axe.

Des moyens d'ajustement de la position longitudinale du second axe peuvent être prévus.

Selon un mode particulièrement avantageux de réalisation, des moyens de renfort supplémentaires peuvent être associés à au moins l'un des paliers. Pour faciliter le montage, et dans le cas où l'on monte d'abord le second axe de l'axe croisillon sur la face arrière de la platine, cette platine peut présenter un premier et un second ajourages disposés dans des régions respectivement situées en regard de la première et de la seconde extrémités du premier axe lorsque le second axe est maintenu dans les troisième et quatrième paliers.

L'invention sera bien comprise et ses avantages apparaîtront mieux à la lecture de la description détaillée qui suit, d'un mode de réalisation donné à titre d'exemple non limitatif.

La description se réfère aux figures annexées sur lesquelles :
- la figure 1 est une vue extérieure du rétroviseur selon la flèche F de la figure 2,
- la figure 2 est une vue de dessus du rétroviseur de la figure 1 sur laquelle la platine porte-miroir est suggérée par des traits mixtes,
- la figure 3 est une vue analogue à la figure 2 sans la platine porte-miroir,
- la figure 4 représente en élévation la face arrière de la platine porte-miroir seule,
- les figures 5, 6 et 7 représentent trois phases successives du montage du second axe de l'axe croisillon sur la face arrière de la platine porte-miroir,
- la figure 8 montre la platine porte-miroir avec l'axe croisillon monté,
- les figures 9 et 10 montrent deux phases successives du montage du premier axe de l'axe croisillon sur le support fixe, le second axe dudit axe croisillon étant préalablement monté sur la platine.

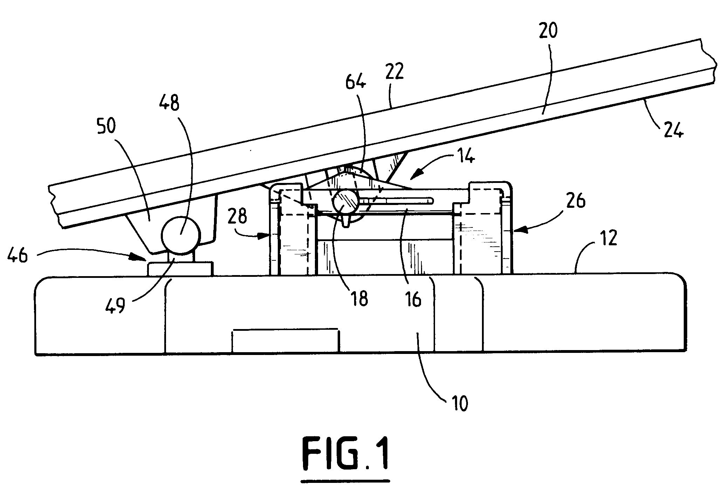

La figure 1 montre, en vue de côté, un rétroviseur comportant :
- un support fixe 10 présentant une face avant 12,
- un axe croisillon 14 qui comprend deux axes perpendiculaires 16 et 18,
- une platine orientable porte-miroir 20 présentant une face avant 22 et une face arrière 24 destinée à être placée en regard de la face avant 12 du support fixe 10, et
- un dispositif de maintien de l'axe croisillon.

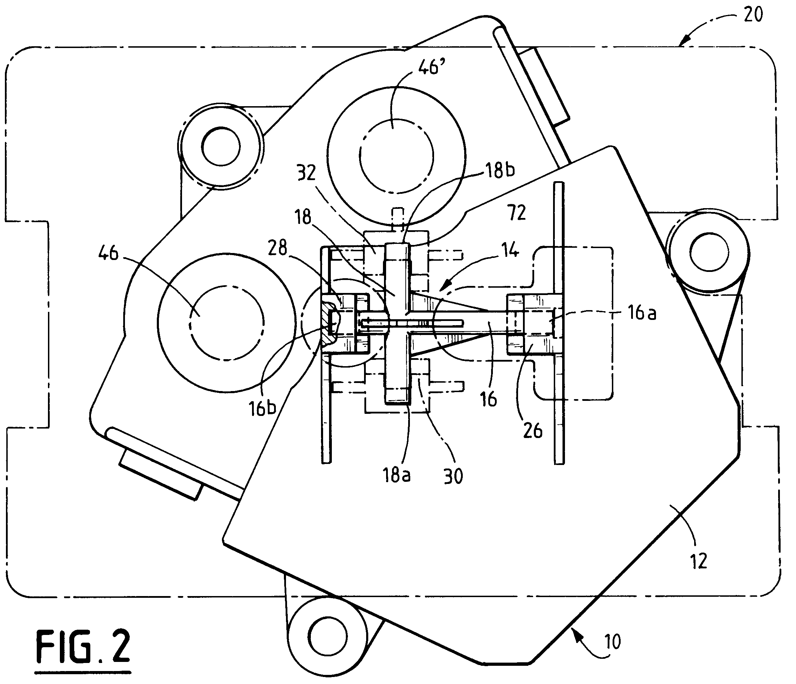

En se reportant à la figure 2, qui représente le rétroviseur en vue de dessus et sur laquelle la platine 20 bien que située sur le dessus du rétroviseur n'est que suggérée par des traits mixtes afin d'alléger le dessin, on voit que l'axe croisillon 14 comprend deux axes 16 et 18 perpendiculaires l'un à l'autre, solidaires l'un de l'autre, et présentant chacun deux extrémités respectivement référencées 16a et 16b, et 18a et 18b.

Le dispositif de maintien de l'axe croisillon 14 comporte des moyens de maintien du premier axe 16 et des moyens de maintien du second axe 18. Les moyens de maintien du premier axe 16 comportent un premier et un second paliers rigides et alignés, respectivement désignés par les références 26 et 28, servant au maintien positif de ce premier axe 16 au voisinage de chacune de ses deux extrémités. Les moyens de maintien du second axe 18 comportent un troisième et un quatrième paliers rigides alignés, respectivement désignés par les références 30 et 32, servant au maintien positif du second axe 18 au voisinage de chacune de ses deux extrémités 18a et 18b.

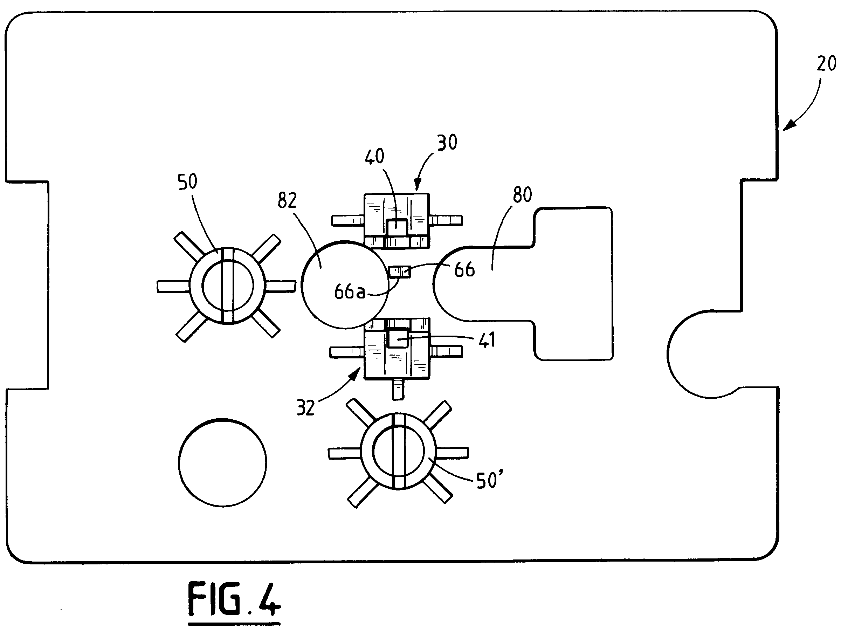

Ces figures 1 et 2 permettent de décrire de façon succincte les moyens de commande du pivotement de la platine orientable 20. En effet, sur la figure 1, on voit une rotule 48 prévue sur l'extrémité d'un organe de commande 49 qui passe à travers une ouverture 46 du support fixe 10. Cette rotule 48 est engagée dans un logement sphérique correspondant ménagé dans un bossage 50 prévu sur la face arrière de la platine. On comprend aisément qu'en poussant ou en tirant l'organe de commande 49, on commande le pivotement de la platine autour du second axe 18 de l'axe croisillon 14. Un dispositif de commande analogue est prévu de l'autre côté de la platine comme on le voit partiellement sur les figures 2 et 4. L'ouverture 46' qui joue un rôle analogue à celui de l'ouverture 46 précitée est disposée de telle sorte qu'en poussant ou en tirant un organe de commande analogue à l'organe de commande 49 et qui passe à travers cette ouverture 46', on peut commander le pivotement de la platine 20, dont la face arrière comporte un bossage 50' adapté, autour du premier axe 16 de l'axe croisillon 14.

Bien sûr, ces dispositifs de commande du pivotement de la platine ne sont ici indiqués qu'à titre d'exemples, mais on peut prévoir d'autres dispositifs commandant le pivotement de la platine autour des deux axes de l'axe croisillon 14.

Par référence aux figures suivantes, on décrit maintenant de manière plus précise le montage de l'axe croisillon 14 dans les moyens de maintien de cet axe.

Dans l'exemple représenté, le second axe 18 de l'axe croisillon 14 est plus court que le premier axe 16 et l'on commence par monter ce second axe dans ses moyens de maintien solidaires de la face arrière 24 de la platine 20. Il est évidemment possible d'utiliser un dispositif de maintien similaire en montant d'abord le premier axe de l'axe croisillon sur la face avant du support fixe quelles que soient les longueurs respectives des deux axes.

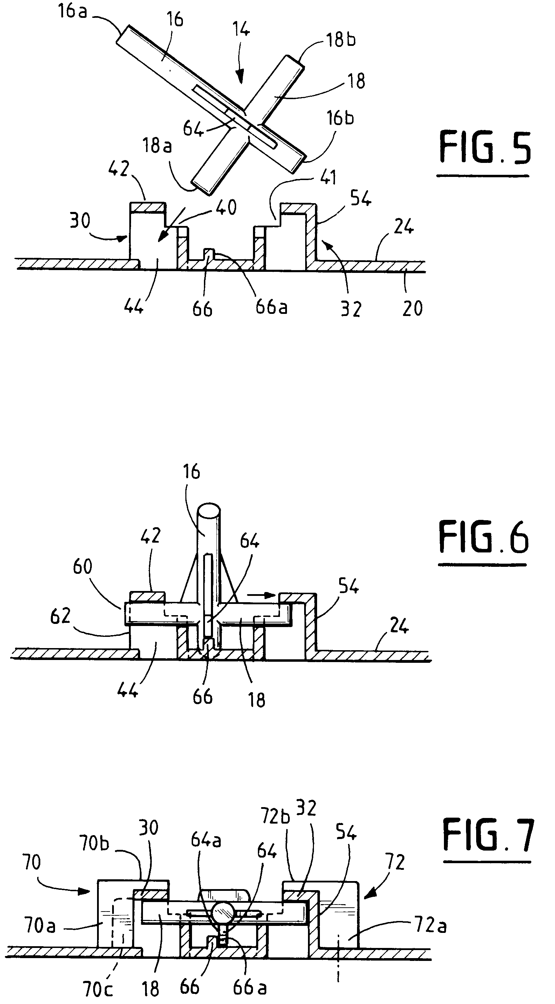

La figure 4 montre, en élévation, la face arrière de la platine qui, pour la cohérence des dessins, est munie des bossages 50 et 50' servant au dispositif de commande en pivotement. On voit sur cette figure le troisième palier 30 et le quatrième palier 32 qui font partie des moyens de maintien du second axe 18 de l'axe croisillon sur la face arrière de la platine. On décrit maintenant ces paliers en faisant également référence aux figures 5 à 7. Les troisième et quatrième paliers présentent chacun une ouverture frontale 40, 41. Le troisième palier 30 au moins présente une cavité 44 qui s'étend, à partir de son ouverture frontale 40, vers la face arrière 24 de la platine 20. Pour faciliter le montage en oblique de la première extrémité du troisième axe, la face supérieure 42 de ce palier peut être décalée par rapport à sa face frontale. Le quatrième palier 32 peut être similaire au troisième palier 30 ou ne pas présenter de cavité.

Comme on le voit sur la figure 5, la première extrémité 18a du second axe 18 peut être engagée dans le troisième palier 30 à travers son ouverture frontale 40, jusque dans la cavité 44, en position inclinée vers la face arrière 24 de la platine 20. On peut ainsi glisser le second axe dans la cavité 44 dans cette position inclinée jusqu'à ce que sa seconde extrémité 18b se situe à l'aplomb de l'ouverture frontale 41 du quatrième palier 32. On peut alors, comme on le voit sur la figure 6, ramener l'axe croisillon dans une position où le second axe 18 est parallèle à la face arrière 24 de la platine 20 pour, par simple translation vers le quatrième palier 32, insérer la seconde extrémité 18b de ce second axe 18 dans le quatrième palier 32.

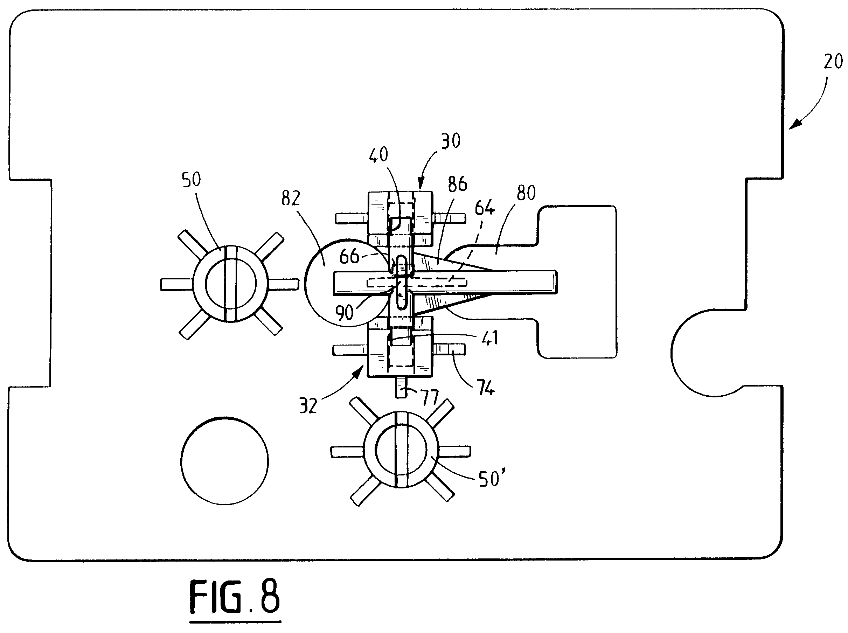

Finalement, le second axe de l'axe croisillon est maintenu dans les troisième et quatrième paliers comme le montrent les figures 7 et 8.

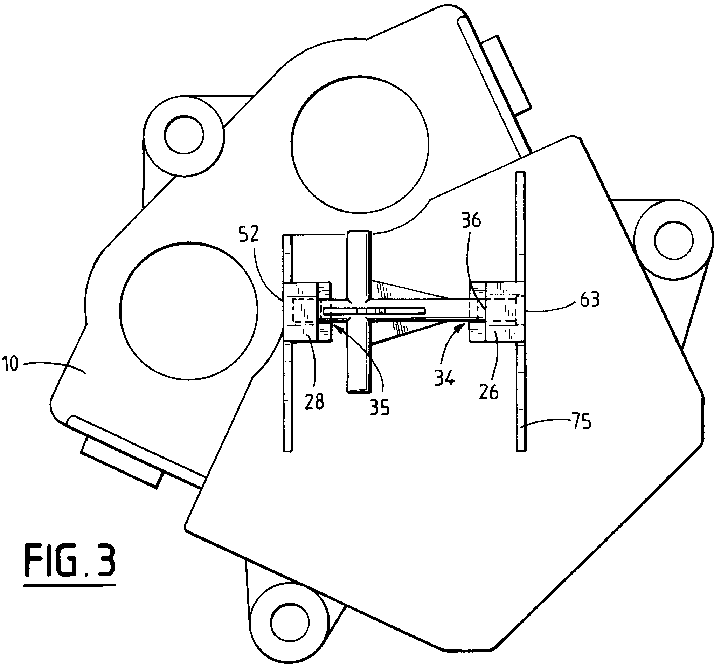

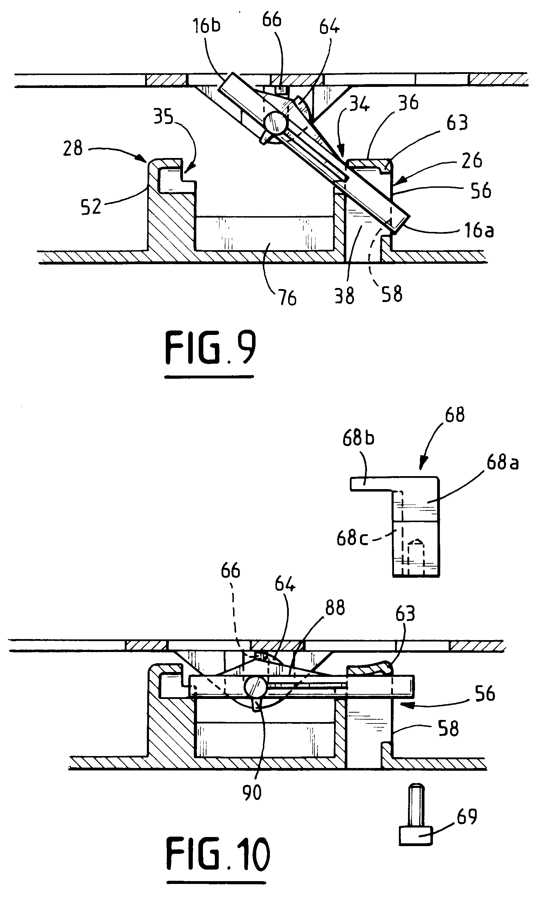

Une fois le second axe 18 maintenu sur la face arrière de la platine, le montage du premier axe sur la face avant du support peut s'effectuer comme le montrent les figures 9 et 10, la configuration des premier et second paliers étant également visible sur la figure 3.

Les premier et second palier 26, 28 présentent chacun une ouverture frontale 34, 35. Le premier palier 26 au moins présente une cavité 38 qui s'étend, à partir de son ouverture frontale 34, vers la face avant 12 du support fixe 10. On peut ainsi, comme le montre la figure 9, insérer la première extrémité 16a du premier axe 16 dans le premier palier 26 et dans la cavité 38 de ce dernier en position inclinée de ce premier axe vers la face avant du support fixe 10. Alors, dès que la seconde extrémité 16b du premier axe se situera à l'aplomb de l'ouverture frontale 35 du second palier 28, on pourra ramener l'axe croisillon dans une position où le premier axe 16 est parallèle à la face avant 12 du support fixe 10 et, comme le montre la figure 10, insérer la seconde extrémité 16b de ce premier axe 16 dans le second palier 28.

Le second palier peut présenter une paroi terminale 52 susceptible de recevoir en butée la seconde extrémité 16b du premier axe 16. De manière analogue, le quatrième palier peut présenter une paroi terminale 54 susceptible de recevoir en butée la seconde extrémité 18b du second axe 18.

Comme le montre la figure 9, et pour permettre d'utiliser le mode de montage qui vient d'être décrit tout en limitant la taille du premier palier 26, celui-ci peut présenter une ouverture terminale 56 à laquelle se raccorde vers le bas l'ouverture terminale 58 de la cavité 38. L'ensemble formé par ces deux ouvertures 56 et 58 s'étend sur une hauteur supérieure au diamètre du premier axe 16 au voisinage de sa première extrémité 16a. On peut ainsi introduire l'axe incliné jusqu'à ce qu'il dépasse au-delà de l'ouverture 58 de la cavité et, dans cette position de dépassement, ramener le premier axe 16 parallèle à la face avant 12 du support 10 en laissant dépasser l'extrémité 16a par l'ouverture 56.

De manière analogue, le troisième palier 30 peut présenter une ouverture terminale 60 à laquelle se raccorde vers le bas une ouverture terminale 62 de la cavité 44 de ce troisième palier. L'ensemble formé par ces ouvertures 60 et 62 s'étend alors sur une hauteur supérieure au diamètre du second axe 18 au voisinage de sa première extrémité 18a, ce qui autorise le dépassement de cet axe comme on l'a indiqué pour le premier axe.

On se reporte maintenant aux figures 3 et 9 pour indiquer que l'ouverture terminale 56 du premier palier 26 peut être bordée vers le haut par une butée élastique déformable 63 susceptible de se déformer lors de la mise en place du premier axe 16 dans les premier et second paliers, comme le montre la figure 10, et de retrouver son attitude initiale pour coopérer en tant que butée avec la seconde extrémité 16b du premier axe 16 lorsque celui-ci est maintenu par les premier et second paliers.

Le rétroviseur comporte avantageusement des moyens d'ajustement de la position longitudinale du second axe 18. Ces moyens comprennent une nervure d'ajustement 64 qui s'étend en saillie sensiblement au niveau de la jonction du premier axe 16 et du second axe 18 à partir de l'axe croisillon. Cette nervure d'ajustement présente au moins une face d'ajustement 64a parallèle au premier axe 16. Les moyens d'ajustement comportent en outre au moins un élément d'ajustement 66 qui s'étend en saillie à partir de la face arrière 24 de la platine et présente une face 66a perpendiculaire à cette face arrière 24. La nervure d'ajustement 64 fait saillie vers le bas en considérant la platine, c'est-à-dire vers la face arrière 24 de cette platine. Comme on le voit sur la figure 9, la face dirigée vers le bas de cette nervure d'ajustement peut présenter une forme sensiblement en arc de cercle.

Ainsi, lorsqu'on introduit la première extrémité 18a du second axe 18 dans le troisième palier 30, la nervure d'ajustement 64 et l'élément d'ajustement 66 ne coopèrent pas entre eux. Ensuite lorsque, comme on le voit sur la figure 6, l'axe croisillon est déplacé en translation pour insérer sa seconde extrémité 18b dans le quatrième palier 32, il suffit, pour permettre ce libre mouvement en translation, de garder l'axe croisillon dans une position où le premier axe 16 est suffisamment incliné par rapport à la face arrière 24 de la platine 20. Cette position permet en effet à la nervure d'ajustement 64 de passer au-dessus de la face supérieure de l'élément d'ajustement 66. Enfin lorsque, comme on le voit sur la figure 7, l'axe croisillon est ramené dans une position où à la fois le premier et le second axe 16 et 18 sont approximativement parallèles à la face arrière 24 de la platine 20, la nervure d'ajustement coopère par sa face d'ajustement 64a avec la face 66a de l'élément d'ajustement 66. On peut au choix prévoir deux éléments d'ajustement du type de l'élément 66 disposés de part et d'autre de la nervure d'ajustement 64 lorsque l'axe est en position montée (auquel cas les deux éléments d'ajustement forment entre eux une rainure de guidage) ou, comme on le voit sur la figure 7, ajuster la position de l'axe croisillon d'un premier côté par la coopération de la nervure d'ajustement et de l'élément d'ajustement et d'un deuxième côté par la coopération en butée de la seconde extrémité 18b du second axe de l'axe croisillon et de la paroi terminale 54 du quatrième palier 32.

En fait il est évident que l'ajustement doit rester viable quand, l'axe croisillon étant monté, la platine 20 est inclinée par rapport au support 10. On considère donc que l'axe est "suffisamment" incliné par rapport à la face arrière 24 de la platine lorsqu'il est incliné d'un angle supérieur à l'angle maximal d'inclinaison de la platine montée sur le support. De même, on considère que les premier et second axes 16 et 18 sont "approximativement" parallèles à la face arrière 25 de la platine 20 lorsque leurs angles d'inclinaison par rapport à cette face arrière restent inférieurs aux angles maximaux lorsque la platine est montée sur le support par l'intermédiaire de l'axe croisillon.

Le rétroviseur peut comporter des moyens de renfort supplémentaires associés à au moins l'un des paliers indiqués en variante sur les figures 7 et 10. Ces moyens de renfort supplémentaires comportent avantageusement au moins une pièce de renfort susceptible d'être montée contre au moins l'un des paliers. Les figures montrent une pièce de renfort 68 associée au premier palier 26, une pièce de renfort 70 associée au troisième palier 30 et une pièce de renfort 72 associée au quatrième palier 32. Ces pièces de renfort peuvent être amovibles et par exemple montées contre le palier associé par des vis telles que la vis 69 de la pièce 68. Les pièces de renfort peuvent également être montées de manière définitive, par exemple par sertissage. Chacune de ces pièces de renfort comprend une première partie 68a, 70a, 72a qui en position montée se situe contre la face terminale du palier associé. Les pièces de renfort comportent une seconde partie 68b, 70b, 72b qui en position montée recouvre au moins partiellement la face supérieure du palier associé.

On peut, comme le montre la figure 10, prévoir de monter les pièces de renfort après le montage de l'axe croisillon sur le support 10 ou sur la platine 20.Dans ce cas, le face frontale de la pièce de renfort placée contre la premier ou le troisième palier peut servir de butée à la première extrémité du premier ou du second axe.

Pour des raisons d'accessibilité, on peut également prévoir de les monter préalablement au montage de l'axe croisillon. Dans ce cas, pour les pièces de renfort associées au premier ou au troisième paliers et lorsque ces paliers et leurs cavités comportent une ouverture terminale, les pièces de renfort 68 ou 70 présentent avantageusement un creux 68c ou 70c sur la face frontale de leurs premières parties 68a ou 70a. Ce creux est prévu de telle sorte que les ouvertures terminales du palier associé et de sa cavité débouchent dessus lorsque les pièces de renfort sont montées. Les creux 68c ou 70c permettent évidemment le dépassement de la première extrémité du premier ou du second axes lorsqu'on les monte sur les premier ou second paliers.

Le rétroviseur comporte avantageusement des nervures de rigidité des paliers ; ces nervures peuvent être disposées transversalement à l'axe d'alignement des paliers comme la nervure 74 de la figure 8 et la nervure 75 de la figure 3 ou selon leur axe d'alignement comme la nervure 76 de la figure 9 ou la nervure 77 de la figure 8. Cette dernière nervure peut être absente lorsque, comme sur la figure 7, une pièce de renfort 72 est montée contre le quatrième palier.

Comme on le voit sur la figure 4 et sur la figure 8, la platine 20 peut présenter un premier et un second ajourages 80, 82, disposés dans des régions de cette platine respectivement situés en regard de la première et de la seconde extrémités du premier axe 16 lorsque le second axe 18 est maintenu dans les troisième et quatrième paliers. Ces ajourages, qui peuvent être remplacés par des allègements dans l'épaisseur de la platine, permettent d'incliner le premier axe de l'axe croisillon de manière suffisante, en laissant éventuellement l'une de ses extrémités dépasser par l'un d'entre eux pour monter cet axe sur le support fixe une fois le premier axe monté sur la platine. Les ajourages peuvent être évasés, comme l'ajourage 80 pour constituer une réserve de débattement non seulement pour une extrémité de l'un des axes de l'axe croisillon, mais aussi pour le palier associé.

Pour augmenter sa robustesse, l'axe croisillon 14 peut être muni de nervures de renfort 86, visibles sur la figure 8, qui joignent entre eux le premier et le second axes.

L'axe croisillon peut également comporter une ou deux nervures de rigidité, telles que la nervure 88 disposée longitudinalement selon le premier axe 16, ou la nervure 90 disposée longitudinalement selon le second axe 18. Dans le cas où la nervure d'ajustement 64 et la nervure de rigidité 88 sont simultanément présentes et si elles sont situées du même côté de l'axe, elles sont de préférence superposées comme le montre la figure 10.

## Revendications

1. Rétroviseur comportant : un support fixe (10) présentant une face avant (12) ; un axe croisillon (14) comprenant deux axes (16, 18) perpendiculaires l'un à l'autre, solidaires l'un de l'autre, et présentant chacun deux extrémités (16a, 16b ; 18a, 18b) ; une platine orientable porte-miroir (20) présentant une face avant (22) destinée à recevoir un miroir et une face arrière (24) destinée à être placée en regard de la face avant (12) du support fixe (10); et un dispositif de maintien de l'axe croisillon, ce dispositif comportant des moyens (26, 28) de maintien du premier axe (16) dudit axe croisillon (14) solidaires de la face avant (12) du support fixe (10) et des moyens (30, 32) de maintien du second axe (18) dudit axe croisillon (14) solidaires de la face arrière (24) de la platine (20), cette dernière étant orientable par pivotement autour desdits premier et second axes (16, 18),
caractérisé en ce que les moyens de maintien du premier axe (16) comportent un premier (26) et un second (28) paliers rigides alignés présentant chacun une ouverture frontale (34, 35) et servant au maintien positif dudit premier axe (16) au voisinage de chacune de ses deux extrémités (16a, 16b), le premier palier (26) au moins présentant une cavité (38) qui s'étend, à partir de l'ouverture frontale (34) dudit premier palier, vers la face avant (12) du support fixe (10), de telle sorte que la première extrémité (16a) du premier axe puisse être engagée en oblique dans le premier palier (26) et dans ladite cavité (38) et que la seconde extrémité (16b) dudit premier axe (16) puisse être engagée dans le second palier (28), et
en ce que les moyens de maintien du second axe (18) comportent un troisième (30) et un quatrième (32) paliers rigides alignés présentant chacun une ouverture frontale (40, 41) et servant au maintien positif dudit second axe (18) au voisinage de chacune de ses deux extrémités (18a, 18b), le troisième palier (30) au moins présentant une cavité (44) qui s'étend, à partir de l'ouverture frontale (40) dudit troisième palier, vers la face arrière (24) de la platine (20), de telle sorte que la première extrémité (18a) du second axe (18) puisse être engagée en oblique dans le troisième palier (30) et dans ladite cavité (44) et que la seconde extrémité (18b) dudit second axe (18) puisse être engagée dans le quatrième palier (32).

2. Rétroviseur selon la revendication 1, caractérisé en ce que le second palier (28) présente une paroi terminale (52) susceptible de recevoir en butée la seconde extrémité (16b) du premier axe (16).

3. Rétroviseur selon l'une des revendications 1 et 2, caractérisé en ce que le premier palier (26) présente une ouverture terminale (56) à laquelle se raccorde vers le bas l'ouverture terminale (58) de la cavité (38) dudit premier palier (26), l'ensemble formé par lesdites ouvertures terminales (56, 58) s'étendant sur une hauteur supérieure au diamètre du premier axe (16) au voisinage de sa première extrémité (16a).

4. Rétroviseur selon la revendication 3, caractérisé en ce que l'ouverture terminale (56) du premier palier (26) est bordée vers le haut par une butée élastique déformable (63) raccordée à la paroi supérieure (36) dudit premier palier et susceptible de se déformer lors de la mise en place du premier axe (16) dans les premier et second paliers (26, 28) et de retrouver son attitude initiale pour coopérer en tant que butée avec la première extrémité (16a) du premier axe (16) lorsque celui-ci est maintenu par les premier et second paliers (26, 28).

5. Rétroviseur selon l'une quelconque des revendications 1 à 4, caractérisé en ce que le quatrième palier (32) présente une paroi terminale (54) susceptible de recevoir en butée la seconde extrémité (18b) du second axe (18).

6. Rétroviseur selon l'une quelconque des revendications 1 à 5, caractérisé en ce que le troisième palier (30) présente une ouverture terminale (60) à laquelle se raccorde vers le bas l'ouverture terminale (62) de la cavité (44) dudit troisième palier (30), l'ensemble formé par lesdites ouvertures terminales (60, 62) s'étendant sur une hauteur supérieure au diamètre du second axe (18) au voisinage de sa première extrémité (18a).

7. Rétroviseur selon l'une quelconque des revendications 1 à 6, caractérisé en ce qu'il comporte des moyens d'ajustement de la position longitudinale du second axe (18) comprenant une nervure d'ajustement (64) s'étendant en saillie sensiblement au niveau de la jonction du premier (16) et du second (18) axe et présentant au moins une face d'ajustement (64a) parallèle au premier axe, et au moins un élément d'ajustement (66) s'étendant en saillie à partir de la face arrière (24) de la platine (20) présentant une face (66a) perpendiculaire à ladite face arrière (24) de la platine (20) et susceptible de coopérer avec la face d'ajustement (64a) de ladite nervure d'ajustement (64) lorsque le premier et le second axes (16, 18) sont approximativement parallèles à la face arrière (24) de la platine (20).

8. Rétroviseur selon l'une quelconque des revendications 1 à 7, caractérisé en ce qu'il comporte, en outre, des moyens de renfort supplémentaires (68, 70, 72), associés à au moins l'un des paliers (26, 30, 32).

9. Rétroviseur selon la revendication 8, caractérisé en ce que les moyens de renfort supplémentaires comportent au moins une pièce de renfort (68, 70, 72) susceptible d'être montée contre au moins l'un des paliers (26, 30, 32), ladite pièce comprenant une première partie (68a, 70a, 72a) qui, en position montée, se situe contre la face terminale du palier associé (26, 30, 32) et une seconde partie perpendiculaire à ladite première partie et qui, en position montée, recouvre au moins partiellement la face supérieure du palier associé (26, 30, 32).

10. Rétroviseur selon la revendication 9, caractérisé en ce que la pièce de renfort (68 ; 70) susceptible d'être montée contre l'un des premier et troisième paliers (26 ; 30) présente un creux (68c ; 70c) sur la face frontale de sa première partie (68a ; 70a) sur lequel débouchent les ouvertures terminales (56, 58 ; 60, 62) du palier associé (26 ; 30) et de la cavité (38 ; 44) dudit palier lorsque ladite pièce de renfort (68 ; 70) est montée.

11. Rétroviseur selon l'une quelconque des revendications 1 à 10, caractérisé en ce qu'il comporte des nervures (74, 75, 76, 77) de rigidité des paliers.

12. Rétroviseur selon l'une quelconque des revendications 1 à 11, caractérisé en ce que la platine (20) présente un premier et un second ajourages (80, 82) disposés dans des régions de la platine respectivement situées en regard de la première et de la seconde extrémités (16a, 16b) du premier axe (16) lorsque le second axe (18) est maintenu dans les troisième et quatrième paliers (30, 32).

13. Rétroviseur selon l'une quelconque des revendications 1 à 11, caractérisé en ce que l'axe croisillon (14) comporte des nervures de renfort (86) joignant les premier et second axes (16, 18).

14. Rétroviseur selon l'une quelconque des revendications 1 à 13, caractérisé en ce que l'axe croisillon (14) comporte au moins une nervure de rigidité (88, 90) disposée longitudinalement selon l'un des premier et second axes (16, 18).
